# EUROPÄISCHE PATENTSCHRIFT

(11) **EP 1 024 307 B1**
(45) Veröffentlichungstag und Bekanntmachung des Hinweises auf die Patenterteilung: **07.07.2004**
(21) Anmeldenummer: 99100958.0
(22) Anmeldetag: 20.01.1999
(51) Int. Cl.: F16D 3/38

(54) **Antriebsgestänge**
Drive linkage
Tige d'entraînement

(43) Veröffentlichungstag der Anmeldung: 02.08.2000
(73) Patentinhaber: TELEKAP GmbH, 92681 Erbendorf (DE)
(72) Erfinder: Feit, Josef, 92681 Erbendorf (DE)
(74) Vertreter: Herrmann-Trentepohl, Werner, Dipl.-Ing.

(56) Entgegenhaltungen:
- DE-C- 194 434
- US-A- 3 212 290

## Beschreibung

Die Erfindung betrifft ein längenjustierbares Antriebsgestänge zur direkten mechanischen Übertragung einer Drehbewegung von einer Betätigungsstelle zu einem entfernt angeordneten, anzutreibenden Aggregat, wobei das Antriebsgestänge eine Kupplungsmutte mit Vierkantausnehmungen an den Stirnseiten aufweist, siehe zum Beispiel US-A-3 212 290.

Weiterhin sind Antriebsgestänge von örtlichen Wasserleitungsnetzen her bekannt, bei denen die Leitungsführung im frostfreien Bereich des Erdreiches unterhalb der Straßen erfolgt, wobei die z. B. für jeden Hausanschluss vorgesehenen Absperrorgane unmittelbar an den Leitungen innerhalb des Erdreiches angeordnet sind. Etwa senkrecht oberhalb dieser Absperrorgane sind mit der Straßendecke bündig abschließende Gehäuse, sogenannte Straßenkappen, eingelassen, wobei ein gattungsgemäßes, in der Straßenkappe einseitig gelagertes, längenjustierbares Antriebsgestänge, welches im Erdreich unterhalb der Straßenkappe bis zum Absperrorgan von einem teleskopierbaren Hülsrohr umgeben ist, eine axiale Verbindung zur Antriebswelle des unterirdisch angeordneten Absperrorgans herstellt.

Um die Länge des Antriebsgestänges problemlos an die tatsächliche Entfernung zwischen der bündig mit der Straßendecke abschließenden Straßenkappe und Antriebwelle des im Erdreich angeordneten Absperrorgans anpassen zu können, und um eine Veränderung des Straßendeckenniveaus nach Reparaturarbeiten durch Teleskopieren aufzunehmen, umfasst ein solches Antriebsgestänge im wesentlichen eine aus der Straßenkappe nach unten ragende Vierkant-Schlüsselstange, die in eine als Kupplung und Führung dienende vierkantige Ausnehmung einer mit der oberen Stirnseite eines zylindrischen Antriebsrohres fest verbundenen oberen Abdeckplatte eingesteckt ist. Die Vierkant-Schlüsselstange ist in der Vierkantführung der Abdeckplatte in weiten Grenzen axial verschiebbar. Um ein völliges Herausziehen der Vierkant-Schlüsselstange aus der Vierkantführung des Antriebsrohres zu verhindern, ist am unteren Ende der Vierkant-Schlüsselstange eine quer zu deren Längsachse verlaufende Bohrung eingebracht, in welche durch eine in der Außenwand des Antriebsrohres vorgesehene Montageöffnung ein Splint eingesteckt wird. Die aus der Querbohrung der Schlüsselstange herausstehenden Enden des Splintes verhindern das Herausziehen der Schlüsselstange aus der mit dem oberen Ende des Antriebsrohres fest verbundenen Vierkantführung.

Am unteren Ende des Antriebsrohres ist eine untere Abdeckplatte angeordnet, und von dieser Abdeckplatte ragt ein fest mit dieser verbundener konischer Vierkantzapfen senkrecht nach unten. Dieser konische Vierkantzapfen taucht mit Spiel in eine passende vierkantige, konische Ausnehmung einer Kupplungsmuffe ein, mit welcher sie durch einen Splint, der in einer quer zur Achse des Vierkantzapfens und des Muffenkörpers eingebrachten Bohrung gehalten wird, fest verbunden ist. Die vierkantige Ausnehmung erstreckt sich durch die gesamte Kupplungsmuffe und ist zu ihren beiden äußeren Enden hin konisch aufgeweitet. Damit passt das konisch aufgeweitete, nach unten ragende Ende der Kupplungsmuffe auch auf den nach oben ragenden sich konisch verengenden Vierkantzapfen des Endes der Antriebswelle des unterirdischen Absperrorgans. Auch der in die Kupplungsmuffe nach oben eintauchende Vierkantzapfen der Antriebswelle wird durch einen Splint, der in eine quer zur Axialrichtung des Vierkantzapfens der Antriebswelle und der Kupplungsmuffe verlaufende Bohrung eingesteckt wird, fest mit dieser verbunden.

Die konische Aufweitung der vierkantigen Ausnehmungen der Kupplungsmuffe und der mit Spiel eingepasste Sitz der darin befindlichen Vierkantzapfen ermöglichen, dass das Antriebsgestänge gegenüber der Antriebswelle des unterirdisch angeordneten Absperrorgans in bestimmten Grenzen geneigt sein kann, ohne dass die Funktion des Antriebsgestänges beeinträchtigt wird. Solche leichten Neigungen entstehen z. B. durch einseitigen Druck des Erdreiches auf das aus Kunststoff bestehende teleskopierbare Hülsrohr und damit auf das Antriebsrohr.

Bei größeren Drücken kann jedoch eine zu große Neigung und damit ein Klemmen der Vierkantzapfen in der Kupplungsmuffe eintreten, welches nicht nur die Bedienung des Absperrorgans erschwert, sondern schließlich zum Abscheren der Splinte, d. h. zur Funktionsunfähigkeit des Antriebsgestänges führen kann, was angesichts der zur Instandsetzung erforderlichen erneuten Tiefbauarbeiten einen erheblichen Schaden verursacht.

Da das Abscheren der Splinte nicht nur durch das Verklemmen infolge einer zu großen Durchbiegung des Antriebsgestänges und damit einer zu großen Neigung der in die Muffe eingreifenden Zapfen der Schlüsselstange bzw. der Antriebswelle des Absperrorgans, sondern auch durch axialen Druck der Zapfen innerhalb der Kupplungsmuffe, z. B. durch das Gewicht darüber fahrender Baufahrzeuge, eintreten kann, weil die Kupplungsmuffe eine durchgehende Vierkant-Ausnehmung aufweist und alle axialen Drücke durch die Splinte aufgenommen werden müssen, neigt die beschriebene bekannte Ausführung des Antriebsgestänges verstärkt zu Ausfällen mit den bereits erwähnten erheblichen Konsequenzen.

Der Erfindung liegt daher die Aufgabe zugrunde, ein Antriebsgestänge zur mechanischen Übertragung einer Drehbewegung von einer Betätigungsstelle zu einem entfernt angeordneten, anzutreibenden Aggregat zu schaffen, welches sich auch größeren Abweichungen der Neigung zwischen der Achse des anzutreibenden Aggregates und der Achse des Antriebsgestänges kontrolliert anpasst, ohne dass dessen Funktion beeinträchtigt wird, und welches gegenüber axialen Belastungen relativ unempfindlich ist. Das Antriebsgestänge soll dabei einen einfachen Aufbau aufweisen und kostengünstig herstellbar sein.

Die Aufgabe wird gemäß der Erfindung durch die Merkmale des Anspruchs 1 gelöst.

Darüber hinaus ist in vorteilhafter Weise vorgesehen, dass jeweils zwei sich gegenüberliegende Seitenflächen der Vierkantausnehmungen zueinander parallel und die beiden anderen Seitenflächen nach außen hin divergierend angeordnet sind. Wenn darüber hinaus die in die Kupplungsmuffe eingreifenden Enden der Antriebseinrichtung bzw. der Antriebswelle des Absperrorgans als Vierkantzapfen ausgebildet sind, können die Drehkräfte unmittelbar über die Vierkantzapfen in die Kupplungsmuffe eingeleitet werden, so dass die Verbindungseinrichtungen zwischen der Antriebseinrichtung, der Kupplungsmuffe und der Antriebswelle wiederum keinen Scherkräften unterliegen. Die Projektion des jeweiligen Querschnittes der Vierkantzapfen kann in etwa der Bodenfläche der jeweiligen Vierkantausnehmung mit geringem Spiel entsprechen, und die Neigung der divergierenden Seitenflächen der Ausnehmungen können in etwa so gewählt sein, dass die Länge der Ausnehmung um etwa ein Drittel größer als der entsprechende Querschnitt des oberen Vierkantzapfens bzw. des Vierkantzapfens am Antriebswellenende ist.

In vorteilhafter Weise sind für die schwenkbewegliche Festlegung der Vierkantzapfen in der Kupplungsmuffe, d. h. der Erzielung einer Verbindung zwischen den Vierkantzapfen und der Kupplungsmuffe, Splinte vorgesehen, welche in zueinander fluchtenden Querbohrungen im Bereich der Ausnehmungen der Kupplungsmuffe und in den Vierkantzapfen gelagert sind. Die Querbohrungen in den Vierkantzapfen besitzen dabei einen größeren Querschnitt als die Querbohrungen in der Kupplungsmuffe, wobei in vorteilhafter Weise vorgesehen sein kann, dass die Splinte mittels Presspassung in den Querbohrungen der Kupplungsmuffe aufgenommen werden, während sie zentrisch mit einem Spiel in den Querbohrungen der Vierkantzapfen gelagert sind. Hierdurch wird selbst dann eine Schwenkbewegung des jeweiligen Zapfenendes ermöglicht, wenn dieser vollflächig auf den Boden der Ausnehmung aufsitzt, ohne dass ein Verklemmen der Verbindung zwischen Zapfen und Kupplungsmuffe eintritt. Vorteilhaft sind jedoch die Stirnflächen der Vierkantzapfen gebogen ausgebildet, insbesondere halbzylindermantelförmig oder halbkugelförmig. In diesem Fall können in vorteilhafterweise die Zylinderachsen der halbzylindermantelförmigen Stirnflächen bzw. die Kugelmittelpunkte der halbkugelförmigen Stirnflächen der Vierkantzapfen in der Achse bzw. der Achsmitte der Querbohrungen der Vierkantzapfen angeordnet sein, so dass das Spiel der Spielpassungen zwischen den Querbohrungen und den Splintaußenflächen sehr gering gehalten werden kann.

Da die Schwenkebenen von der die Schlüsselstange aufweisenden Antriebseinrichtung und Antriebswelle in der Kupplungsmuffe um 90° zueinander versetzt angeordnet sind, lässt sich das erfindungsgemäße Antriebsgestänge selbst dann störungsfrei drehen, wenn durch Erdreich eine größere Durchbiegung der verhältnismäßig langen Schlüsselstange hervorgerufen wird.

Weitere Merkmale, Einzelheiten und Vorteile der Erfindung ergeben sich aus der nachfolgenden Beschreibung von bevorzugten Ausführungsbeispielen anhand der Zeichnung. Darin zeigen:
- Fig. 1: eine schematische Axialschnittansicht durch eine Straßenkappe mit dem erfindungsgemäßen Antriebsgestänge;
- Fig. 2: eine vergrößerte Darstellung des unteren Teils des erfindungsgemäßen Antriebsgestänges;
- Fig. 3: eine Schnittansicht entlang der Schnittlinie III-III nach Fig. 2;
- Fig. 4: eine Schnittansicht entlang der Linie IV-IV nach Fig. 2;
- Fig. 5: einen Axialschnitt durch ein weiteres Ausführungsbeispiel einer Kupplungsmuffe mit halbzylindermantelförmig ausgebildeten Vierkantzapfen, und
- Fig. 6: einen Axialschnitt durch ein weiteres Ausführungsbeispiel einer Kupplungsmuffe mit halbkugelförmig ausgebildeten Vierkantzapfen.

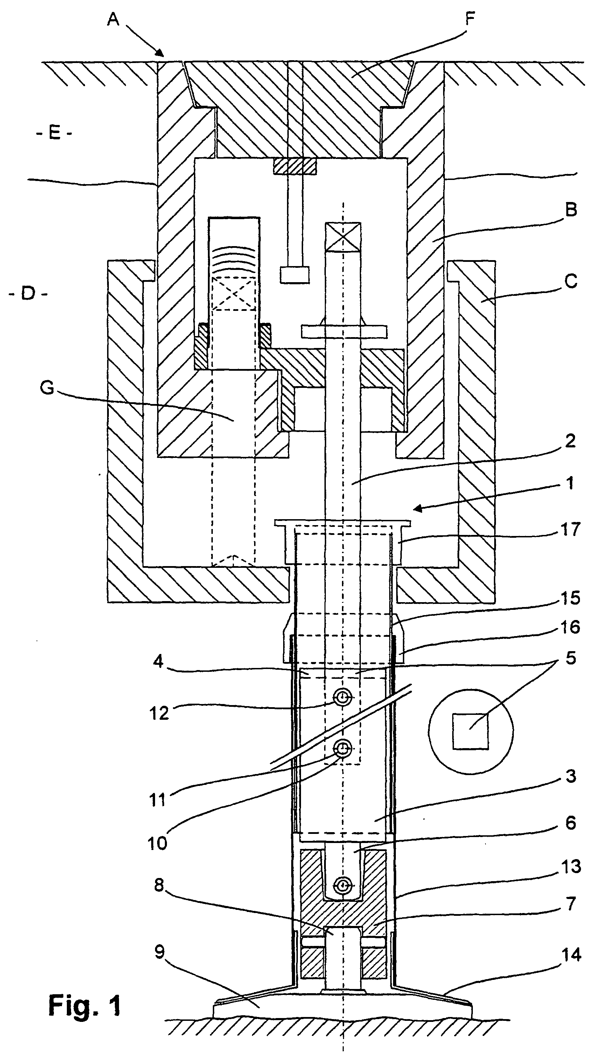

Die Fig. 1 zeigt die Ansicht einer Straßenkappe mit einem inneren Gehäuse B und einem äußeren Gehäuse C, die teleskopartig ineinander verschiebbar gelagert sind, so daß die in dem Erdreich D und der Straßendecke E aufgenommene Straßenkappe an eine veränderte Höhenlage der Straßendecke E anpassbar ist. Die Straßenkappe ist durch einen Deckel F verschlossen.

Eine Veränderung der Höhenlage des inneren Gehäuses B gegenüber dem äußeren Gehäuse C kann durch Betätigen einer Spindelschraube G erzielt werden.

In der Straßenkappe ist das erfindungsgemäße Antriebsgestänge 1 aufgenommen, welches bei dem gezeigten Ausführungsbeispiel ebenfalls teleskopierbar ist. Das Antriebsgestänge umfasst im wesentlichen eine Antriebseinrichtung mit einer Schlüsselstange 2 und einem Achsrohr 3, welches an seinem oberen Ende einen aufgeschweißten Deckel 4 mit einer vierkantförmigen Ausnehmung 5 und an seinem unteren verschlossenen Ende einen angeschweißten Vierkantzapfen 6 aufweist.

Während das Achsrohr 3 mittels einer Kupplungsmuffe 7 mit dem oberen Ende der Antriebswelle 8 eines Absperrorgans 9 verbunden ist, ist die Schlüsselstange 2 in der Längsrichtung des Achsrohres 3 in der Vierkantausnehmung 5 verschieblich gelagert und damit teleskopierbar.

Damit die Schlüsselstange 2 nicht aus dem Achsrohr 3 nach oben herausgezogen wird, ist am unteren Ende der Schlüsselstange eine Querbohrung 10 vorgesehen, in welche ein Splint 11 eingesetzt ist. Dieser Splint besitzt jedoch eine kürzere Länge als der Innendurchmesser des Achsrohres 3, so dass er sich im Achsrohr 3 mit der Schlüsselstange 2 auf- und abbewegen kann. Seine Länge ist jedoch größer als die Diagonale der Vierkantausnehmung 5. Dies hat zur Folge, dass die Schlüsselstange nur soweit nach oben aus dem Achsrohr 3 herausgezogen werden kann, bis der Splint 11 gegen die Unterseite des Deckels 4 zur Anlage kommt. Der Splint 11 wird durch die Öffnung 12, welche sich in der Mantelfläche des Achsrohres 3 befindet, eingeführt, während sich die Schlüsselstange 2 in einer geeigneten Position befindet, in welcher die Querbohrung 10 mit der Öffnung 12 fluchtet.

Zum Schutz gegen eindringendes Erdreich ist ein äußeres Hülsrohr 13 vorgesehen, welches auf eine Hülsrohrglocke 14 aufgesetzt ist und in dessen oberem offenen Ende ein inneres Hülsrohr 15 in einer Reduzierhülse 16 verschiebbar geführt ist. Das innere Hülsrohr ist an seinem oberen Ende mittels eines PE-Deckels 17 verschlossen. Die Hülsrohre 13 und 15 verhindern zwar, dass Erdreich an die beweglichen Teile 3, 7 und 8 gelangt, können jedoch nicht verhindern, dass Erdverschiebungen einen Druck auf diese beweglichen Teile ausüben, was dazu führt, dass sich die Schlüsselstange 2 durchbiegt und aus ihrer axialen Lage gegenüber dem Vierkantzapfen 8 am Ende der Antriebswelle verschoben wird.

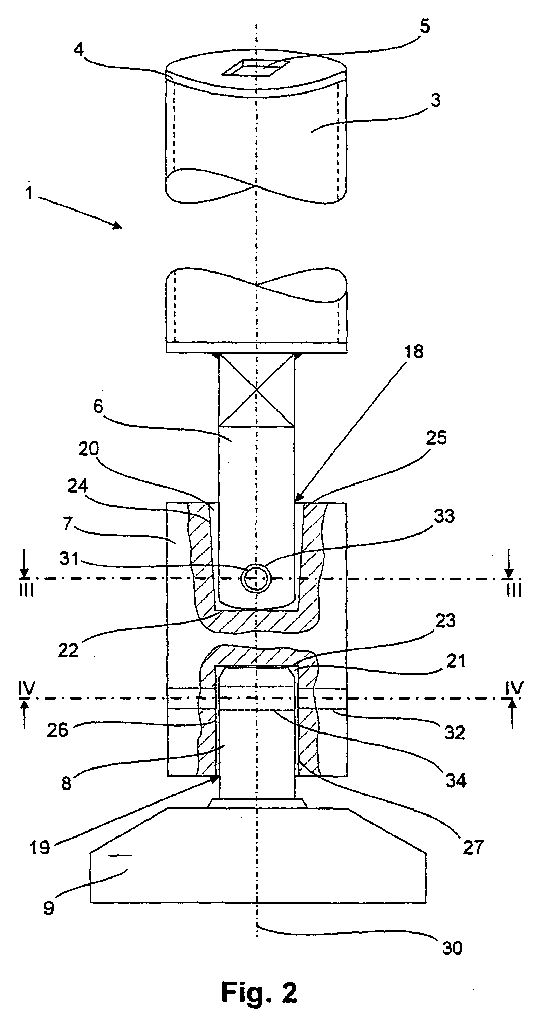

Wie im einzelnen aus der Fig. 2 zu sehen ist, besitzt die Kupplungsmuffe 7 an ihren stimseitigen Enden 18, 19 Ausnehmungen 20 bzw. 21, die durch Bodenflächen 22 bzw. 23 in der Tiefe begrenzt sind. Während die Seitenflächen 24, 25 der Ausnehmung 20 zur Stirnseite 18 hin divergieren, verlaufen die vordere und hintere (in der Fig. 2 nicht sichtbaren) Seitenflächen der Aussparung 20 parallel zu einander. Umgekehrt ist es bei der Aussparung 21, bei welcher die Seitenflächen 26, 27 parallel zueinander verlaufen, während die vordere und hintere Seitenfläche (in der Fig. 2 nicht sichtbar) zur Stirnfläche 19 divergieren.

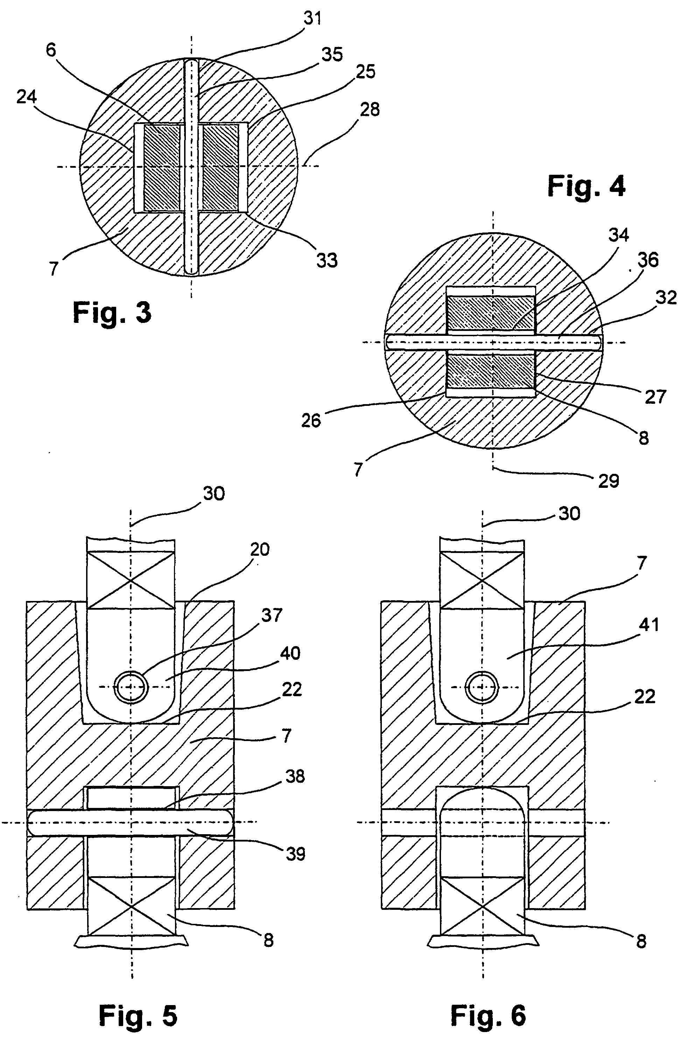

Diese Verhältnisse sind besser in den Fig. 3 und 4 zu erkennen, welche Schnitte entlang der Linien III-III bzw. IV-IV durch die Kupplungsmuffe 7 darstellen. Aus diesen Figuren ist auch zu entnehmen, dass die Schwenkebene 28 des Vierkantzapfens 6 zur Schwenkebene 29 des Vierkantzapfens 8 am Ende der Antriebswelle um 90° versetzt ist. Da die Seitenflächen 26, 27 nahezu spielfrei gegen die Seitenflächen des Vierkantzapfens 8 am Ende der Antriebswelle anliegen, kann ein Drehmoment von der Muffe 7 auf den Vierkantzapfen 8 am Ende der Antriebswelle übertragen werden. Ebenso wird das am oberen Ende der Schlüsselstange 2 erzeugte Drehmoment über die Schlüsselstange 2, das Achsrohr 3 und den Vierkantzapfen 6 auf die Muffe 7 übertragen.

Wie aus den Fig. 2 bis 4 ferner zu entnehmen ist, sind die Verbindungen zwischen dem Vierkantzapfen 6, der Muffe 7 und dem Vierkantzapfen 8 am Ende der Antriebswelle folgendermaßen hergestellt. In der Muffe sind senkrecht zur Achse 30 des Antriebsgestänges 1 verlaufende Querbohrungen 31, 32 vorgesehen, während in dem Vierkantzapfen 6 eine durchgehende Querbohrung 33 und in dem Vierkantzapfen 8 am Ende der Antriebswelle eine durchgehende Querbohrung 34 vorgesehen sind. Die Querbohrungen 33 bzw. 34 besitzen einen größeren Durchmesser als die Querbohrungen 31 bzw. 32. Ein in die Bohrungen 31, 33 bzw. 32, 34 eingesetzter Splint 35 bzw. 36 legt den Vierkantzapfen 6 bzw. den Vierkantzapfen 8 am Ende der Antriebswelle 8 in den entsprechenden Ausnehmungen 20, 21 schwenkbeweglich fest.

Während bei dem Ausführungsbeispiel gemäß Fig. 2 die stirnseitigen Enden des Vierkantzapfens 6 bzw. des Vierkantzapfens 8 am Ende der Antriebswelle parallel zu den Bodenflächen 22 bzw. 23 verlaufen, sind die entsprechenden Enden bei dem Ausführungsbeispiel der Fig. 5 halbzylindermantelförmig ausgebildet und bei dem Ausführungsbeispiel nach Fig. 6 halbkugelförmig. Das Spiel 37 zwischen der größeren Querbohrung 38 und dem Splint 39 kann daher relativ klein gewählt werden. Dadurch ergibt sich in vorteilhafter Weise ein weicheres Anfahren zu Beginn der Drehbewegung. Während sich bei der halbzylindermantelförmigen Stirnfläche 40 eine linienförmige Berührung zur Bodenfläche 22 der Ausnehmung 20 der Muffe ergibt, ist bei der halbkugelförmigen Stirnfläche 41 eine punktförmige Berührung zur Bodenfläche 22 vorhanden. Dadurch werden die Reibungskräfte reduziert, während gleichwohl die in Richtung der Achse 30 auftretenden Druckkräfte über die Muffe 7 in den Vierkantzapfen 8 der Antriebswelle übertragen werden können.

### Bezugszeichenliste

- A: Straßenkappe
- B: Inneres Gehäuse
- C: Äußeres Gehäuse
- D: Erdreich
- E: Straßendecke
- F: Deckel
- G: Spindelschraube
- 1: Antriebsgestänge
- 2: Schüsselstange
- 3: Achsrohr
- 4: Deckel
- 5: Ausnehmung
- 6: Vierkantzapfen
- 7: Kupplungsmuffe
- 8: Vierkantzapfen
- 9: Aggregat
- 10: Querbohrung
- 11: Splint
- 12: Öffnung
- 13: äußeres Hülsrohr
- 14: Hülsrohrglocke
- 15: inneres Hülsrohr
- 16: Reduzierhülse
- 17: PE-Deckel
- 18,19: stirnseitiges Ende
- 20,21: Ausnehmung
- 22,23: Bodenfläche
- 24,25: Seitenflächen
- 26,27: Seitenflächen
- 28: Schwenkebene
- 29: Schwenkebene
- 30: Achse
- 31,32: Querbohrung
- 33,34: Querbohrung
- 35,36: Splint
- 37: Spiel
- 38: Querbohrung
- 39: Splint
- 40,41: Stirnfläche

## Patentansprüche

1. Längenjustierbares Antriebsgestänge (1) zur direkten mechanischen Übertragung einer Drehbewegung von einer Betätigungsstelle zu einem entfernt angeordneten anzutreibenden Aggregat (9), insbesondere einem unterirdisch angeordneten Absperrorgan, umfassend eine Antriebseinrichtung (2, 3) mit
einer an der Betätigungsstelle drehbar gelagerten Vierkant-Schlüsselstange (2) und einem zylinderförmigen Achsrohr (3), welches an seiner oberen Stirnseite einen fest verbundenen Deckel (4) mit einem axialen Vierkantdurchbruch (5), an seiner unteren Stirnseite eine fest verbundene Abdeckung und einen mit dieser fest verbundenen, axial nach außen vorstehenden Vierkantzapfen (6) aufweist, sowie
eine Kupplungsmuffe (7) mit axialen Vierkantausnehmungen (20, 21) an beiden Stirnseiten (18, 19), wobei die Seitenflächen der Vierkant-Schlüsselstange (2) zum anzutreibenden Aggregat (9) hin mit den Seitenflächen des Vierkantdurchbruches (5) des Achsrohres (3) in Eingriff stehen und die Vierkant-Schlüsselstange (2) im Vierkantdurchbruch (5) in Längsrichtung verschiebbar ist, und der Vierkantzapfen (6) an der unteren Abdeckung des Achsrohres (3) mit der Vierkantausnehmung (20) an der oberen Stirnseite (18) der Kupplungsmuffe (7) sowie die Vierkantausnehmung (21) an der unteren Stirnseite (19) der Kupplungsmuffe (7) mit einem axial vorstehenden Vierkantzapfen (8) des anzutreibenden Aggregates (9) in Eingriff stehen und mit diesen über in Querbohrungen (31 - 34) in den Vierkantausnehmungen (20, 21) der Kupplungsmuffe (7) und in den Vierkantzapfen (6, 8) eingefügte Splinte (35, 36) verbunden sind, wobei jeweils zwei sich gegenüberliegende Seitenflächen (26, 27) jeder Vierkantausnehmung (20, 21) zueinander parallel und die beiden anderen Seitenflächen (24, 25) nach außen hin divergierend angeordnet sind, wobei die parallelen und divergierenden Seitenflächen (24, 25, 26, 27) der Vierkantausnehmung (20) an der oberen Stirnseite (18) der Kupplungsmuffe (7) relativ zu den parallelen und divergierenden Seitenflächen der Vierkantausnehmung (21) an der unteren Stirnseite (19) der Kupplungsmuffe (7) radial um 90° versetzt angeordnet sind, wobei die Querbohrungen (31, 32) in die Vierkantausnehmungen (20, 21) jeweils parallel zu den divergierenden Seitenflächen eingebracht sind, und wobei die Querbohrungen (33, 34) in den Vierkantzapfen (6, 8) gegenüber den Splintaußenflächen eine Spielpassung (37) aufweisen.

2. Antriebsgestänge nach Anspruch 1, **dadurch gekennzeichnet, dass** die Vierkantausnehmungen (20, 21) der Kupplungsmuffe (7) von den Stirnseiten (18, 19) der Kupplungsmuffe (7) zum Inneren der Kupplungsmuffe (7) hin durch jeweilige Bodenflächen (22, 23) in ihrer Tiefe begrenzt sind.

3. Antriebsgestänge nach einem der vorhergehenden Ansprüche, **dadurch gekennzeichnet, dass** die Projektion des jeweiligen Querschnittes der Vierkantzapfen (6, 8) etwa der Bodenfläche (22, 23) der jeweiligen Vierkantausnehmung (20, 21) mit geringem Spiel entspricht.

4. Antriebsgestänge nach Anspruch 1, **dadurch gekennzeichnet, dass** die Querbohrungen (33, 34) in den Vierkantzapfen (6, 8) einen größeren Querschnitt aufweisen als die Querbohrungen (31, 32) in der Kupplungsmuffe (7).

5. Antriebsgestänge nach einem der vorhergehenden Ansprüche, **dadurch gekennzeichnet, dass** die Stirnflächen der Vierkantzapfen (6, 8) gebogen ausgebildet sind.

6. Antriebsgestänge nach Anspruch 5, **dadurch gekennzeichnet, dass** die Stirnflächen (40) der Vierkantzapfen halbzylindermantelförmig ausgebildet sind (Fig.5).

7. Antriebsgestänge nach Anspruch 5, **dadurch gekennzeichnet, dass** die Stirnflächen (41) der Vierkantzapfen halbkugelförmig ausgebildet sind (Fig.6).

8. Antriebsgestänge nach den Ansprüchen 6 oder 7, **dadurch gekennzeichnet, dass** die Zylinderachsen der halbzylindermantelformigen Stirnflächen (40) bzw. die Kugelmittelpunkte der halbkugelförmigen Stirnflächen (41) der Vierkantzapfen in der Achse bzw. der Achsmitte der Querbohrungen (31 bis 34) angeordnet sind, und dass das Spiel (37) der Spielpassungen zwischen den Querbohrungen (33, 34) und den Splintaußenflächen gering ist.

9. Antriebsgestänge nach einem der vorhergehenden Ansprüche, **dadurch gekennzeichnet, dass** sich die Vierkantzapfen (6, 8) mit ihren Stirnflächen auf den Bodenflächen (22, 23) der Vierkantausnehmungen (20, 21) der Kupplungsmuffe (7) abstützen.

## Claims

1. A drive linkage (1) of adjustable length for directly mechanically transmitting rotary movement from an actuating point to a remote unit (9) to be driven, particularly a shut-off element disposed underground, including a drive device (2, 3) with a rectangular key rod (2), which is rotatably mounted at the actuating point, and a cylindrical axial tube (3), which has, at its upper end surface, a rigidly connected lid (4) with an axial rectangular opening (5), a rigidly connected cover at its lower end surface and an axially outwardly projecting rectangular peg (6) rigidly connected to the latter and a coupling sleeve (7) with axial rectangular recesses (20, 21) at both end surfaces (18, 19), whereby the side surfaces of the rectangular key rod (2) towards the unit (9) to be driven are in engagement with the side surfaces of the rectangular opening (5) of the axial tube (3) and the rectangular key rod (2) is movable in the longitudinal direction within the rectangular opening (5) and the rectangular peg (6) at the lower cover of the axial tube (3) is in engagement with the rectangular recess (20) at the upper end surface (18) of the coupling sleeve (7) and the rectangular recess (21) at the lower end surface (19) of the coupling sleeve (7) is in engagement with an axially projecting rectangular peg (8) on the unit (9) to be driven and they are connected to them by means of pins (35, 36) introduced via transverse bores (31-34) into the rectangular recesses (20, 21) in the coupling sleeve (7) and in the rectangular pegs (6, 8) whereby two opposing side surfaces (26, 27) of each rectangular recess (20, 21) are arranged parallel to one another and the other two side surfaces (24, 25) are arranged to be divergent towards the exterior, whereby the parallel and divergent side surfaces (24, 25, 26, 27) of the rectangular recess (20) at the upper end surface (18) of the coupling sleeve (7) are arranged radially offset by 90° relative to the parallel and diverging side surfaces of the rectangular recess (21) at the lower end surface (19) of the coupling sleeve (7), whereby the transverse bores (31, 32) into the rectangular recesses (21, 22) are formed respectively parallel to the diverging side surfaces and whereby the transverse bores (33, 34) in the rectangular pegs (6, 8) have a clearance fit (37) with respect to the pin outer surfaces.

2. A drive linkage as claimed in Claim 1, **characterised in that** the depth of the rectangular recesses (20, 21) in the coupling sleeve (7) from the end faces (18, 19) of the coupling sleeve (7) towards the interior of the coupling sleeve (7) is defined by respective base surfaces (22, 23).

3. A drive linkage as claimed in one of the preceding claims, **characterised in that** the projection of the respective cross-section of the rectangular pegs (6, 8) corresponds approximately to the base surface (22, 23) of the respective rectangular recess (20, 21) with a small clearance.

4. A drive linkage as claimed in Claim 1, **characterised in that** the transverse bores (33, 34) into the rectangular peg (6, 8) have a larger cross-sectional area than the transverse bores (31, 32) into the coupling sleeve (7).

5. A drive linkage as claimed in one of the preceding claims, **characterised in that** the end surfaces of the rectangular pegs (6, 8) are of curved shape.

6. A drive linkage as claimed in Claim 5, **characterised in that** the end surfaces (40) of the rectangular pegs are of semi-cylindrical shell shape (Fig. 5).

7. A drive linkage as claimed in Claim 5, **characterised in that** the end surfaces (41) of the rectangular pegs are of hemispherical shape (Fig. 6).

8. A drive linkage as claimed in Claims 6 or 7, **characterised in that** the cylinder axes of the semi-cylindrical shell-shaped end surfaces (40) or the sphere centre points of the hemispherical end surfaces (41) of the rectangular pegs are arranged on the axis or the central axis of the transverse bores (31 to 34) and that the clearance (37) of the clearance fits between the transverse bores (33, 34) and the outer surfaces of the pins is small.

9. A drive linkage as claimed in any one of the preceding claims, **characterised in that** the end surfaces of the rectangular pegs (6, 8) bear on the base surfaces (22, 23) of the rectangular recesses (20, 21) in the coupling sleeve (7).

## Revendications

1. Tige d'entraînement ajustable en longueur (1) pour la transmission mécanique directe d'un mouvement rotatif à partir d'un point d'actionnement vers un appareil (9) à entraîner disposé à distance, en particulier à un organe de verrouillage disposé de façon souterraine, comprenant un dispositif d'entraînement (2,3) avec
une tige à tête carrée (2) logée de façon rotative sur le point d'actionnement et
un tube d'essieu de forme cylindrique (3) qui présente sur son côté latéral supérieur un couvercle (4) solidement raccordé avec un passage carré axial (5), sur son côté frontal inférieur un capotage solidement raccordé et un tourillon carré (6) faisant saillie axialement vers l'extérieur solidement raccordé à celui-ci, ainsi qu'un manchon d'accouplement (7) avec des évidements carrés axiaux (20,21) sur les deux côtés frontaux (18,19), moyennant quoi les faces latérales de la tige à tête carrée (2) sont en prise en direction de l'appareil à entraîner (9) avec les faces latérales du passage carré (5) du tube d'essieu (3) et la tige à tête carrée (2) est déplaçable dans le passage carré (5) dans la direction longitudinale, et le tourillon carré (6) et le tourillon carré (6) sur le capotage inférieur du tube d'essieu (3) est en prise avec l'évidement carré (20) sur le côté frontal supérieur (18) du manchon d'accouplement (7) de même que l'évidement carré (21) sur le côté frontal inférieur (19) du manchon d'accouplement (7) est en prise avec un tourillon carré (8) faisant saillie axialement de l'appareil à entraîner et sont raccordés à ceux-ci par des goupilles (35,36) insérées dans des alésages transversaux (31-34) dans les évidements carrés (20,21) du manchon d'accouplement (7) et dans les tourillons carrés (6,8), moyennant quoi deux faces latérales (26,27) respectivement en regard l'une de l'autre de chaque évidement carré (20,21) sont disposées parallèlement entre elles et les deux autres faces latérales (24,25) sont disposées de façon divergente vers l'extérieur, moyennant quoi les faces latérales parallèles et divergentes (24,25,26,27) de l'évidement carré (20) sont disposées de façon décalée radialement de 90° sur le côté frontal supérieur (18) du manchon d'accouplement (7) par rapport aux faces latérales parallèles et divergentes de l'évidement carré (21) sur le côté frontal inférieur (19) du manchon d'accouplement (7), moyennant quoi les alésages transversaux (31,32) sont introduits dans les évidements carrés (20,21) respectivement de façon parallèle aux côtés latéraux divergents, et moyennant quoi les alésages transversaux (33,34) dans les tourillons carrés (6,8) présentent une adaptation de jeu (37) par rapport aux faces extérieures de goupille.

2. Tige d'entraînement selon la revendication 1, **caractérisée en ce que** les évidements carrés (20,21) du manchon d'accouplement (7) sont délimités dans leur profondeur par les côtés frontaux (18,19) du manchon d'accouplement (7) des côtés frontaux (18,19) du manchon d'accouplement (7) vers l'intérieur du manchon d'accouplement (7) par des faces de fond (22,23) respectives.

3. Tige d'entraînement selon l'une des revendications précédentes, **caractérisée en ce que** la projection de la section transversale respective du tourillon carré (6,8) correspond sensiblement à la face de fond (22,23) de l'évidement carré respectif (20,21) avec un faible jeu.

4. Tige d'entraînement selon la revendication 1, **caractérisée en ce que** les alésages transversaux (33,34) dans les tourillons carrés (6,8) présentent une plus grande section transversale que les alésages transversaux (31,32) dans le manchon d'accouplement (7).

5. Tige d'entraînement selon l'une des revendications précédentes, **caractérisée en ce que** les faces frontales des tourillons carrés (6,8) sont conçues de façon arquée.

6. Tige d'entraînement selon la revendication 5, **caractérisée en ce que** les faces frontales (40) des tourillons carrés sont conçues en forme d'enveloppe semi - cylindrique (Figure 5).

7. Tige d'entraînement selon la revendication 5, **caractérisé en ce que** les faces frontales (41) des tourillons carrés sont conçues en forme hémisphérique (Figure 6).

8. Tige d'entraînement selon les revendications 6 ou 7, **caractérisée en ce que** les axes cylindriques des faces en forme d'enveloppe semi - cylindrique (40) ou les centres sphériques des faces frontales hémisphériques (41) des tourillons sont disposés dans l'axe ou au centre axial des alésages transversaux (31 à 34) et **en ce que** le jeu (37) des adaptations de jeu entre les alésages transversaux (33,34) et les faces extérieures de goupille est faible.

9. Tige d'entraînement selon l'une des revendications précédentes, **caractérisée en ce que** les tourillons carrés (6,8) reposent par leurs faces frontales sur les faces (22,23) des évidements carrés (20,21) du manchon d'accouplement (7).
